# EUROPEAN PATENT APPLICATION

(11) **EP 2 703 465 A1**
(43) Date of publication of application: **05.03.2014**
(21) Application number: 12776976.8
(22) Date of filing: 17.04.2012
(51) Int. Cl.: C09K 3/18, C08F 220/22, C08K 5/20

(54) **WATER-REPELLING, OIL-REPELLING AGENT COMPOSITION, METHOD FOR PRODUCING SAME, AND ARTICLE**

(30) Priority: 27.04.2011 JP 2011099960
(71) Applicant: Asahi Glass Company, Limited, Tokyo 100-8405 (JP)
(72) Inventor: HIRONO, Takao, Tokyo 100-8405 (JP); SHIMADA, Minako, Tokyo 100-8405 (JP); MORIMOTO, Eiji, Tokyo 100-8405 (JP); OOMORI, Yuuichi, Tokyo 100-8405 (JP)
(74) Representative: Müller-Boré & Partner Patentanwälte PartG mbB
(86) International application number: PCT/JP2012/060383
(87) International publication number: WO 2012/147573

(57) **Abstract**

To provide a water/oil repellent composition which can produce an article which has favorable water/oil repellency and washing durability, into which infiltration of a coating liquid to form a moisture-permeable waterproofing film or the like can be suppressed and which is excellent in the design, and which presents a low environmental impact, its production method and an article having its surface treated with the water/oil repellent composition.

A water/oil repellent composition comprising a polymer having structural units based on the following monomer (a) and structural units based on the following monomer (b), and an aqueous medium containing water and the following amide solvent (I) is used. Monomer (a): a compound represented by (Z-Y)ₙX, wherein Z is a C₁₋₆ polyfluoroalkyl group or the like, Y is a bivalent organic group having no fluorine atom or the like, n is 1 or 2, and X is a polymerizable unsaturated group. Monomer (b): vinyl chloride. Amide solvent (I): a compound represented by R¹O(CH₂)ᵣ(CHR⁴)ₛC(O)NR²R³, wherein r is an integer of from 0 to 3, s is 0 or 1, R¹ is a C₁₋₃ alkyl group, each of R² and R³ is a methyl group or the like, and R⁴ is a hydrogen atom or the like.

## Description

### TECHNICAL FIELD

The present invention relates to a water/oil repellent composition, a method for its production and an article having its surface treated with the water/oil repellent composition.

### BACKGROUND ART

As a method for imparting water/oil repellency to the surface of an article (such as a fiber product), a method of treating the article by means of a water/oil repellent composition composed of an emulsion having, dispersed in an aqueous medium, a copolymer having structural units based on a monomer having a polyfluoroalkyl group (a polyfluoroalkyl group will be hereinafter referred to as a R^{f} group) having at least 7 carbon atoms, has been known.

However, recently, EPA (US Environmental Protection Agency) has pointed out that a compound having a perfluoroalkyl group (a perfluoroalkyl group will be hereinafter referred to as a R^{F} group) having at least 7 carbon atoms is likely to be decomposed in the environment or in the body, and the decomposition product is likely to be accumulated, i.e. it presents a high environmental impact. Therefore, a water/oil repellent composition comprising a copolymer which has structural units based on a monomer having a R^{F} group having at most 6 carbon atoms, and has no structural units based on a monomer having a R^{F} group having at least 7 carbon atoms, has been required.

As a water/oil repellent composition containing such a copolymer, the following water/oil repellent composition has been, for example, proposed (Patent Document 1).

A water/oil repellent composition comprising a copolymer having structural units based on the following monomer (a), structural units based on the following monomer (b) and structural units based on the following monomer (c), and an aqueous medium, in a molar ratio of structural units based on the monomer (b) to structural units based on the monomer (c) ((b)/(c)) of at least 1:
Monomer (a): A monomer having a R^{F} group having at most 6 carbon atoms.
Monomer (b): Vinyl Chloride.

Monomer (c): A vinyl ether having no polyfluoroalkyl group and having a crosslinkable functional group.

An article having its surface treated with the water/oil repellent composition has favorable water repellency after drying without forcibly heating after washing (hereinafter referred to as washing durability). Here, on an article (a fiber product such as a sports wear) having its surface treated with the water/oil repellent composition, a moisture-permeable waterproofing film is provided on the rear side so as to impart a function to release water vapor by sweating from the body and a function to shut out the rain (Patent Document 2). As a method for producing such an article having a moisture-permeable waterproofing film, a lamination method or a coating method is well known. The lamination method is a method of bonding a porous polyfluoroethylene film or a microporous polyurethane resin film to the rear side of an article having its surface treated with a water/oil repellent composition by means of e.g. an adhesive component. The coating method is a method of coating the rear side of an article having its surface treated with a water/oil repellent composition, with a coating liquid containing a resin liquid of a polyurethane resin or an acrylic resin. This article is required such that the resin film bonded or coated is not easily separated. As a medium contained in the coating liquid, in the case of dry coating of forming a resin film by drying after coating, it has been known to use methyl ethyl ketone, ethyl acetate, toluene, isopropyl alcohol or the like which is highly volatile. On the other hand, in the case of wet coating of forming a resin film by coagulation in water, a polar organic solvent such as N,N-dimethylformamide (hereinafter referred to as DMF) is used.

However, since a moisture-permeable waterproofing film is formed on the rear side of an article having its surface treated with the water/oil repellent composition, if a coating liquid is applied, the coating liquid infiltrates into the surface of the article, and a resin film is partially formed even on the surface side of the article, and thus the design of the article may be impaired.

### PRIOR ART DOCUMENTS

### PATENT DOCUMENTS

Patent Document 1: W02010/047258
Patent Document 2: JP-A-07-229070

### DISCLOSURE OF INVENTION

### TECHNICAL PROBLEM

The object of the present invention is to provide an article which has favorable water/oil repellency and washing durability, into which infiltration of a coating liquid to form a moisture-permeable waterproofing film or the like is suppressed, and which is excellent in the design. Further, another object of the present invention is to provide a water/oil repellent composition which presents a low environmental impact, its production method and an article having its surface treated with the water/oil repellent composition.

### SOLUTION TO PROBLEM

The water/oil repellent composition of the present invention comprises a polymer having structural units based on the following monomer (a) and structural units based on the following monomer (b), and an aqueous medium containing water and the following amide solvent (I):
monomer (a): a compound represented by the following formula (1):

   (Z-Y)ₙX (1)

   wherein Z is a C₁₋₆ polyfluoroalkyl group or a group represented by the following formula (2), Y is a bivalent organic group having no fluorine atom or a single bond, n is 1 or 2, and X is, when n is 1, any one of the groups represented by the following formulae (3-1) to (3-5) and, when n is 2, any one of the groups represented by the following formulae (4-1) to (4-4):

   CᵢF₂ᵢ₊₁O(CFX¹CF₂O)ⱼCFX²- (2)

   wherein i is an integer of from 1 to 6, j is an integer of from 0 to 10, and each of X¹ and X² is a fluorine atom or a trifluoromethyl group;

   -CR=CH₂ (3-1)

   -C(O)OCR=CH₂ (3-2)

   -OC(O)CR=CH₂ (3-3)

   -OCH₂-*φ*-CR=CH₂ (3-4)

   -OCH=CH₂ (3-5)

   wherein R is a hydrogen atom, a methyl group or a halogen atom, and *φ* is a phenylene group;

   -CH[-(CH₂)ₘCR=CH₂]- (4-1)

   -CH[-(CH₂)ₘC(O)OCR=CH₂]- (4-2)

   -CH[-(CH₂)ₘOC(O)CR=CH₂]- (4-3)

   -OC(O)CH=CHC(O)O- (4-4)

   where R is a hydrogen atom, a methyl group or a halogen atom, and m is an integer of from 0 to 4;
monomer (b): vinyl chloride;
amide solvent (I): a compound represented by the following formula (5):

   R¹ O(CH₂)ᵣ (CHR⁴)ₛ C(O)NR²R³ (5)

   wherein r is an integer of from 0 to 3, s is 0 or 1, R¹ is a C₁₋₃ alkyl group, each of R² and R³ which are independent of each other, is a C₁₋₃ alkyl group (provided that it may contain an etheric oxygen atom), and R⁴ is a hydrogen atom or a methyl group.

The monomer (a) is preferably a monomer of the formula (1), wherein Z is a C₄₋₆ perfluoroalkyl group, Y is a C₁₋₄ alkylene group, n is 1, and X is the group (3-3) (provided that R is a hydrogen atom or a methyl group).

The polymer preferably further has structural units based on the following monomer (c):
monomer (c): a monomer having no polyfluoroalkyl group and having a crosslinkable functional group.

The crosslinkable functional group in the monomer (c) is preferably a hydroxy group, a blocked isocyanate group, an amino group or an epoxy group.

The polymer preferably further has structural unites based on the following monomer (d):
monomer (d): an alkyl acrylate or an alkyl methacrylate having no polyfluoroalkyl group and having a C₁₈₋₃₀ alkyl group.

The amide solvent (I) is preferably 3-alkoxy-N,N-dialkylpropionamide. The amount of the amide solvent (I) is preferably from 3 to 50 parts by mass per 100 parts by mass of the polymer.

The water/oil repellent composition of the present invention is preferably an emulsion in which polymer fine particles are dispersed in the aqueous medium. Further, the water/oil repellent composition of the present invention is preferably an emulsion obtained by polymerizing the monomers by emulsion polymerization in the aqueous medium, or a diluted liquid of the emulsion.

The method for producing a water/oil repellent composition of the present invention comprises polymerizing monomer components comprising the above monomer (a) and the monomer (b) in an aqueous medium containing water and the above amide solvent (I) in the presence of a surfactant and a polymerization initiator to produce a dispersion or an emulsion in which fine particles of the polymer to be formed are dispersed in the aqueous medium.

The monomer components preferably further include the above monomer (c).

The monomer components preferably further include the above monomer (d).

The amount of the amide solvent (I) is preferably from 3 to 50 parts by mass per 100 parts by mass of the monomer components.

The article of the present invention is characterized by having its surface treated with the water/oil repellent composition of the present invention thereby having a coating film of the polymer on its surface. Further, the article of the present invention is characterized by having its surface treated with a water/oil repellent composition obtained by the above production method or a diluted liquid thereof, thereby having a coating film of the polymer on its surface.

### ADVANTAGEOUS EFFECTS OF INVENTION

According to the water/oil repellent composition of the present invention, it is possible to obtain an article which has favorable water/oil repellency and washing durability, into which infiltration of a coating liquid to form a moisture-permeable waterproofing film or the like can be suppressed, and which is excellent in the design. Further, the water/oil repellent composition of the present invention presents a low environmental impact.

According to the method for producing a water/oil repellent composition of the present invention, it is possible to produce a water/oil repellent composition with which it is possible to obtain an article which has favorable water/oil repellency and washing durability, into which infiltration of a coating liquid to form a moisture-permeable waterproofing film or the like can be suppressed, and which is excellent in the design, and which presents a low environmental impact.

The article of the present invention has favorable water/oil repellency and washing durability, and into which infiltration of a coating liquid to form a moisture-permeable waterproofing film or the like can be suppressed, and which is thereby excellent in the design, and presents a low environmental impact.

### DESCRIPTION OF EMBODIMENTS

In this specification, a compound represented by the formula (1) will be referred to as a compound (1). Compounds represented by other formulae will also be referred to in the same manner. Further, in this specification, a group represented by the formula (2) will be referred to as a group (2). Groups represented by other formulae will also be referred to in the same manner. Further, a (meth)acrylate in this specification means an acrylate or a methacrylate. Further, in this specification, a monomer means a compound having a polymerizable unsaturated group. Further, in this specification, a R^{f} group is a group having some or all of hydrogen atoms in an alkyl group substituted by fluorine atoms, and a R^{F} group is a group having all the hydrogen atoms in an alkyl group substituted by fluorine atoms.

### <Water/oil repellent composition>

The water/oil repellent composition of the present invention comprises a specific polymer and an aqueous medium as essential components, and may further contain a surfactant or an additive, as the case requires. The water/oil repellent composition of the present invention is preferably an emulsion in which fine particles of a specific polymer are stably dispersed in an aqueous medium, and usually contains a surfactant for the stable dispersion.

Further, the water/oil repellent composition of the present invention is preferably an emulsion obtained by polymerizing the monomers by emulsion polymerization in the aqueous medium, or an emulsion obtained by diluting the emulsion obtained by emulsion polymerization e.g. with water. In the case of emulsion polymerization, polymerization is carried out in the aqueous medium containing a surfactant, and at least part of the surfactant in the water/oil repellent composition is the surfactant used at the time of the polymerization. The additive may be present in the aqueous medium at the time of emulsion polymerization like the surfactant, or may be added to the emulsion after emulsion polymerization.

### (Polymer)

The polymer has structural units based on a monomer (a) and structural units based on a monomer (b).

The polymer preferably further has structural units based on a monomer (c), and may further has structural units based on a monomer (d) and structural units based on a monomer (e), as the case requires.

### Monomer (a):

The monomer (a) is a compound (1):

(Z-Y)ₙX (1)

Z is a C₁₋₆ R^{f} group (provided that the R^{f} group may contain an etheric oxygen atom) or a group (2):

CᵢF₂ᵢ₊₁O(CFX¹CF₂O)ⱼCFX²- (2)

wherein i is an integer of from 1 to 6, j is an integer of from 0 to 10, and each of X¹ and X² which are independent of each other, is a fluorine atom or a trifluoromethyl group.

The R^{f} group is preferably a R^{F} group. The R^{f} group may be linear or branched, and is preferably linear. The number of carbon atoms in the R^{f} group is preferably from 4 to 6.

Z may, for example, be the following groups:

F(CF₂)₄-,

F(CF₂)₅-,

F(CF₂)₆-,

(CF₃)₂CF(CF₂)₂-,

CₖF₂ₖ₊₁O[CF(CF₃)CF₂O]ₕ-CF(CF₃)-, etc.

wherein k is an integer of from 1 to 6, and h is an integer of from 0 to 10.

Y is a bivalent organic group having no fluorine atom or a single bond.

The bivalent organic group is preferably an alkylene group. The alkylene group may be linear or branched. The number of carbon atoms in the alkylene group is preferably from 2 to 6. The bivalent organic group may have -O-, -NH-, -CO-, -S-, -SO₂-, -CD¹=CD²- (wherein each of D¹ and D² which are independent of each other, is a hydrogen atom or a methyl group), etc.

Y may, for example, be the following groups.

-CH₂-,

-CH₂CH₂-,

-(CH₂)₃-,

-CH₂CH₂CH(CH₃)-,

-CH=CH-CH₂-,

-S-CH₂CH₂-,

-CH₂CH₂-S-CH₂CH₂-,

-CH₂CH₂-SO₂-CH₂CH₂-,

-W-OC(O)NH-A-NHC(O)O-(CₚH₂ₚ)-,

etc.
wherein p is an integer of from 2 to 30.

A is a symmetric alkylene group having no branch, an arylene group or an aralkylene group and is preferably -C₆H₁₂-, -*φ*-CH₂-*φ*- or -*φ*- (wherein *φ* is a phenylene group).

W is any one of the following groups.

-SO₂N(R⁵)-C_{d}H_{2d}-,

-CONHC_{d}H_{2d}-,

-CH(R^{F1})-CₑH₂ₑ-,

-C_{q}H_{2q}-

wherein R⁵ is a hydrogen atom or a C₁₋₄ alkyl group, d is an integer of from 2 to 8, R^{F1} is a C₁₋₆ perfluoroalkyl group, e is an integer of from 0 to 6, and q is an integer of from 1 to 20. R^{F1} is preferably a C₄ or C₆ perfluoroalkyl group.

n is 1 or 2.

X is, when n is 1, any one of groups (3-1) to (3-5) and when n is 2, any one of groups (4-1) to (4-4):

-CR=CH₂ (3-1)

-C(O)OCR=CH₂ (3-2)

-OC(O)CR=CH₂ (3-3)

-OCH₂-*φ*-CR=CH₂ (3-4)

-OCH=CH₂ (3-5)

wherein R is a hydrogen atom, a methyl group or a halogen atom, and *φ* is a phenylene group.

-CH[-(CH₂)ₘCR=CH₂]- (4-1)

-CH[-(CH₂)ₘC(O)OCR=CH₂]- (4-2)

-CH[-(CH₂)ₘOC(O)CR=CH₂]- (4-3)

-OC(O)CH=CHC(O)O- (4-4)

wherein R is a hydrogen atom, a methyl group or a halogen atom, and m is an integer of from 0 to 4.

The above Z is preferably a R^{F} group, Y is preferably an alkylene group, and n is preferably 1. In such a case, X is preferably any of the groups (3-3) to (3-5), more preferably the group (3-3). Further, the above R is preferably a hydrogen atom or a methyl group.

The compound (1) is preferably a (meth)acrylate having a C₄₋₆ R^{F} group from the viewpoint of e.g. the polymerizability with other monomers, the flexibility of the coating film containing the polymer, the adhesion of the polymer to an article, the dispersibility in an aqueous medium and efficiency of the emulsion polymerization.

The compound (1) is particularly preferably a compound wherein Z is a C₄₋₆ R^{F} group, Y is a C₁₋₄ alkylene group, n is 1, and X is the group (3-3) (provided that R is a hydrogen atom or a methyl group).

### Monomer (b):

The monomer (b) is vinyl chloride.

By having the structural units based on the monomer (b), the washing durability will be improved.

As the monomer (b), another chlorinated olefin (such as vinylidene chloride) or fluorinated olefin (such as tetrafluoroethylene or vinylidene fluoride) as the after-mentioned another monomer (e) may be used in combination with vinyl chloride. A halogenated olefin other than vinyl chloride is also effective to improve the washing durability like vinyl chloride. However, to improve the washing durability, use of only vinyl chloride is sufficient, and in a usual case, use of a halogenated olefin other than vinyl chloride in combination is not necessarily. Even if it is used in combination, the amount of the structural units based on such a monomer is preferably less than 50 mass%, more preferably less than 20 mass% based on the total amount with the structural units based on vinyl chloride.

### Monomer (c):

The monomer (c) is a monomer having no R^{f} group and having a crosslinkable functional group.

By having structural units based on the monomer (c), the washing durability will further be improved.

The crosslinkable functional group is preferably a functional group having at least one bond selected from a covalent bond, an ionic bond and a hydrogen bond, or a functional group capable of forming a crosslinked structure by an interaction of such a bond. Otherwise, a compound having an active organic group or an element such as hydrogen or halogen in its molecule may be used.

Such a functional group is preferably a hydroxy group, an isocyanate group, a blocked isocyanate group, an alkoxysilyl group, an amino group, a N-alkoxymethylamide group, a silanol group, an ammonium group, an amide group, an epoxy group, an oxazoline group, a carboxy group, an alkenyl group, a sulfonic group or the like, particularly preferably a hydroxy group, a blocked isocyanate group, an amino group or an epoxy group.

The monomer (c) is preferably a (meth)acrylate, an acrylamide, a vinyl ether or a vinyl ester.

The monomer (c) may, for example, be the following compounds. 2-Isocyanatoethyl (meth)acrylate, 3-isocyanatopropyl (meth)acrylate, 4-isocyanatobutyl (meth)acrylate, a 2-butanoneoxime adduct of 2-isocyanatoethyl (meth)acrylate, a pyrazole adduct of 2-isocyanatoethyl (meth)acrylate, a 3,5-dimethylpyrazole adduct of 2-isocyanatoethyl (meth)acrylate, a 3-methylpyrazole adduct of 2-isocyanatoethyl (meth)acrylate, an ε-caprolactam adduct of 2-isocyanatoethyl (meth)acrylate, a 2-butanoneoxime adduct of 3-isocyanatopropyl (meth)acrylate, a pyrazole adduct of 3-isocyanatopropyl (meth)acrylate, a 3,5-dimethylpyrazole adduct of 3-isocyanatopropyl (meth)acrylate, a 3-methylpyrazole adduct of 3-isocyanatopropyl (meth)acrylate, an ε-caprolactam adduct of 3-isocyanatopropyl (meth)acrylate, a 2-butanoneoxime adduct of 4-isocyanatobutyl (meth)acrylate, a pyrazole adduct of 4-isocyanatobutyl (meth)acrylate, a 3,5-dimethylpyrazole adduct of 4-isocyanatobutyl (meth)acrylate, a 3-methylpyrazole adduct of 4-isocyanatobutyl (meth)acrylate, an ε-caprolactam adduct of 4-isocyanatobutyl (meth)acrylate.

Methoxymethyl (meth)acrylamide, ethoxymethyl (meth)acrylamide, butoxymethyl (meth)acrylamide, diacetone (meth)acrylamide, γ-methacryloyloxypropyl trimethoxysilane, trimethoxy vinyl silane, vinyl trimethoxysilane, dimethylaminoethyl (meth)acrylate, diethylaminoethyl (meth)acrylate, dimethylaminopropyl (meth)acrylate, (meth)acryloylmorpholine, (meth)acryloyloxyethyl trimethylammonium chloride, (meth)acryloyloxypropyl trimethylammonium chloride, (meth)acrylamideethyl trimethylammonium chloride, (meth)acrylamidepropyl trimethylammonium chloride.

t-butyl (meth)acrylamide sulfonic acid, (meth)acrylamide, N-methyl (meth)acrylamide, N-methylol (meth)acrylamide, N-butoxymethyl (meth)acrylamide, glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl methacrylate, polyoxyalkylene glycol mono(meth)acrylate, (meth)acrylic acid, 2-(meth)acryloyloxyethyl succinic acid, 2-(meth)acryloyloxyhexahydrophthalic acid, 2-(meth)acryloyloxyethyl acid phosphate, allyl (meth)acrylate, 2-vinyl-2-oxazoline, a polycaprolactone ester of 2-vinyl-4-methyl-(2-vinyloxazoline)hydroxyethyl (meth)acrylate.

Tri(meth)allyl isocyanurate (T(M)AIC manufactured by Nippon Kasei Chemical Co., Ltd.), triallyl cyanurate (TAC manufactured by Nippon Kasei Chemical Co., Ltd.), phenyl glycidyl ether acrylate toluene diisocyanate urethane prepolymer (AT-600 manufactured by KYOEISHA CHEMICAL Co., Ltd.), 3-(methylethylketoxime)isocyanatomethyl-3,5,5-trimethylcyclohexyl(2-hydroxyethyl methacrylate) cyanate (TECHCOAT HE-6P manufactured by Kyoken Kasei), a polycaprolactone ester of hydroxyethyl (meth)acrylate (PLACCEL FA, FM series manufactured by Daicel Chemical Industries, Ltd.).

2-Chloroethyl vinyl ether, 2-hydroxyethyl vinyl ether, 3-hydroxypropyl vinyl ether, 2-hydroxypropyl vinyl ether, 2-hydroxyisopropyl vinyl ether, 4-hydroxybutyl vinyl ether, 4-hydroxycyclohexyl vinyl ether, hexamethylene glycol monovinyl ether, 1,4-cyclohexanedimethanol monovinyl ether, diethylene glycol monovinyl ether, triethylene glycol monovinyl ether, dipropylene glycol monovinyl ether, glycidyl vinyl ether, 2-aminoethyl vinyl ether, 3-aminopropyl vinyl ether, 2-aminobutyl vinyl ether, allyl vinyl ether, 1,4-butanediol divinyl ether, nonanediol divinyl ether, cyclohexanediol divinyl ether, cyclohexanedimethanol divinyl ether, triethylene glycol divinyl ether, trimethylolpropane trivinyl ether, pentaerythritol tetravinyl ether.

The monomer (c) is preferably a 3,5-dimethylpyrazole adduct of 2-isocyanatoethyl (meth)acrylate, a 2-butanoneoxime adduct of 2-isocyanatoethyl (meth)acrylate, 2-hydroxyethyl (meth)acrylate, N-methylol (meth)acrylamide, glycidyl (meth)acrylate, 3-chloro-2-hydroxypropyl methacrylate, a polycaprolactone ester of hydroxyethyl (meth)acrylate (PLACCEL FA or FM-series manufactured by Daicel Chemical Industries, Ltd.).

### Monomer (d):

The monomer (d) is a (meth)acrylate having no R^{f} group and having a C₁₈₋₃₀ alkyl group. The washing durability will further be improved when the alkyl group has at least 18 carbon atoms. When the alkyl groups has at most 30 carbon atoms, the melting point is relatively low, thus leading to easy handling.

The monomer (d) is preferably a (meth)acrylate having a C₁₈₋₃₀ alkyl group, more preferably stearyl (meth)acrylate or behenyl (meth)acrylate, particularly preferably stearyl (meth)acrylate.

### Monomer (e):

The monomer (e) is a monomer other than the monomers (a), (b), (c) and (d).

The monomer (e) may, for example, be the following compounds.

(Meth)acrylates such as methyl (meth)acrylate, ethyl (meth)acrylate, propyl (meth)acrylate, n-butyl (meth)acrylate, t-butyl (meth)acrylate, i-butyl (meth)acrylate, cyclohexyl (meth)acrylate, 2-ethylhexyl (meth)acrylate, n-hexyl (meth)acrylate, benzyl (meth)acrylate, octyl (meth)acrylate, decyl methacrylate, 3-ethoxypropyl acrylate, methoxy-butyl acrylate, 2-ethylbutyl acrylate, 1,3-dimethylbutyl acrylate, 2-methylpentyl acrylate, isobornyl (meth)acrylate, dicyclopentanyl (meth)acrylate, dicyclopentenyl (meth)acrylate, aziridinylethyl (meth)acrylate, 2-ethylhexylpolyoxyalkylene (meth)acrylate, polyoxyalkylene di(meth)acrylate, a (meth)acrylate having silicone in its side chain, a (meth)acrylate having a urethane bond, a (meth)acrylate having a polyoxyalkylene chain having a C₁₋₄ alkyl group at its terminal, and an alkylene di(meth)acrylate.

Alkyl vinyl ethers such as methyl vinyl ether, ethyl vinyl ether, n-propyl vinyl ether isopropyl vinyl ether, n-butyl vinyl ether, isobutyl vinyl ether, pentyl vinyl ether, 2-ethylhexyl vinyl ether, octadecyl vinyl ether, cyclohexyl vinyl ether and a halogenated alkyl vinyl ether.

Olefins such as ethylene, propylene, isoprene, butene, 1,4-butadiene, 1,3-butadiene, pentene, 2-methyl-1-butene, 1-hexene, cyclohexyl-1-pentene, 1-dodecene, 1-tetradecene, 2-methylpentene, 2,2-dimethylpentene, 2-methoxypropylene, styrene, α-methylstyrene, p-methylstyrene, hexylstyrene, octylstyrene and nonylstyrene.

Unsaturated carboxylic acid esters such as a crotonic acid alkyl ester, a maleic acid alkyl ester such as diethyl maleate, dipropyl maleate or dioctyl maleate, a fumaric acid alkyl ester such as diethyl fumarate or dipropyl fumarate, a citraconic acid alkyl ester and a mesaconic acid alkyl ester.

Vinyl carboxylates such as vinyl acetate and vinyl propionate.

Halogenated olefins other than vinyl chloride such as tetrafluoroethylene, hexafluoropropylene, chlorotrifluoroethylene, vinylidene fluoride and vinylidene chloride.

Unsaturated carboxylic acid esters such as a crotonic acid alkyl ester, a maleic acid alkyl ester such as diethyl maleate, dipropyl maleate or dioctyl maleate, a fumaric acid alkyl ester such as diethyl fumarate or dipropyl fumarate, a citraconic acid alkyl ester and a mesaconic acid alkyl ester.

Monomers other than the above, such as allyl acetate, N-vinylcarbazole, maleimide, N-methylmaleimide, vinylpyrrolidone, N,N-dimethyl (meth)acrylamide and an alkyl vinyl ketone.

The monomer (e) is preferably a (meth)acrylate such as cyclohexyl (meth)acrylate, isobornyl methacrylate, i-butyl (meth)acrylate or t-butyl (meth)acrylate, particularly preferably cyclohexyl (meth)acrylate.

As a combination of structural units based on monomers, from the viewpoint of the water/oil repellency and the washing durability, preferred is a combination of structural units based on the monomer (a): a (meth)acrylate having a C₄₋₆ R^{F} group, structural units based on the monomer (b): vinyl chloride, structural units based on the monomer (c) and structural units based on the monomer (d): stearyl (meth)acrylate or behenyl (meth)acrylate.

The proportion of the structural units based on the monomer (a) is preferably from 50 to 100 mass% based on the structural units (100 mass%) based on all the monomers from the viewpoint of the water/oil repellency, and is more preferably from 55 to 90 mass%, particularly preferably from 65 to 85 mass% from the viewpoint of the water/oil repellency and the washing durability.

The proportion of the structural units based on the monomer (b) is preferably from 3 to 50 mass% based on the structural units (100 mass%) based on all the monomers, and from the viewpoint of the washing durability, it is more preferably from 10 to 45 mass%, particularly preferably from 15 to 35 mass%.

The proportion of the structural units based on the monomer (c) is preferably from 0 to 15 mass% based on the structural units (100 mass%) based on all the monomers, and from the viewpoint of the washing durability, it is more preferably from 0.1 to 15 mass%, particularly preferably from 0.1 to 10 mass%.

The proportion of the structural units based on the monomer (d) is preferably from 0 to 30 mass% based on the structural units (100 mass%) based on all the monomers, and from the viewpoint of the washing durability, it is more preferably from 1 to 25 mass%, particularly preferably from 5 to 25 mass%.

The proportion of the structural units based on the monomer (e) is preferably from 0 to 30 mass%, more preferably from 0 to 25 mass%, particularly preferably from 0 to 20 mass% based on the structural units (100 mass%) based on all the monomers.

In the present invention, the proportion of the structural units based on a monomer is obtained by the NMR analysis and the elemental analysis. In a case where it cannot be obtained by the NMR analysis and the elemental analysis, it may be calculated based on the charged amount of the monomer at the time of the production of a water/oil repellent composition.

The mass average molecular weight (Mw) of the copolymer is at least 50,000, particularly preferably at least 60,000. Within the above range, infiltration of a coating liquid to form a moisture-permeable waterproofing film or the like applied to the rear side of an article into the surface side can be suppressed. The mass average molecular weight (Mw) of the copolymer is preferably at most 500,000, particularly preferably at most 300,000 from the viewpoint of the film-forming property and the storage stability.

The number average molecular weight (Mn) of the copolymer is preferably at least 12,000, particularly preferably at least 15,000. The number average molecular weight (Mn) of the copolymer is preferably at most 300,000, particularly preferably at most 150,000.

The mass average molecular weight (Mw) and the number average molecular weight (Mn) of the copolymer are a molecular weight calculated as polystyrene, as measured by gel permeation chromatography (GPC), and specifically measured by the following method.

The polymer is dissolved in tetrahydrofuran (hereinafter referred to as THF) to obtain a 0.5 mass% solution, which is passed through a 0.2 µm filter to prepare a sample for analysis. With respect to the sample, the number average molecular weight (Mn) and the mass average molecular weight (Mw) are measured under the following conditions.
Measurement temperature: 23°C,
Injected amount: 0.2 mL,
Outflow rate: 1 mL/min,
Eluent: THF.

### (Aqueous medium)

The aqueous medium contains water and the amide solvent (I) and as the case requires, another medium.

The amide solvent (I) is a compound (5):

R¹O(CH₂)ᵣCHR⁴)ₛC(O)NR²R³ (5)

wherein r is an integer of from 0 to 3, s is 0 or 1, R¹ is a C₁₋₃ alkyl group, each of R² and R³ which are independent of each other, is a C₁₋₃ alkyl group (provided that it may contain an etheric oxygen atom), and R⁴ is a hydrogen atom or a methyl group.
R¹ may be linear or branched, and is preferably linear.
R¹ may, for example, be a methyl group, an ethyl group, a propyl group or an isopropyl group, and is preferably a methyl group.

Each of R² and R³ may, for example, be a methyl group, an ethyl group, a propyl group, an isopropyl group or a methoxyethyl group, and each of them is preferably a methyl group.

R⁴ is preferably a hydrogen atom, and r+s is preferably 1 or 2.

The compound (5) may, for example, be the following compounds.

3-Methoxy-N,N-dimethylpropionamide, 3-ethoxy-N,N-dimethylpropionamide, 3-n-propoxy-N,N-dimethylpropionamide, 3-isopropoxy-N,N-dimethylpropionamide, 3-methoxy-N,N-diethylpropionamide, 3-ethoxy-N,N-diethylpropionamide, 3-n-propoxy-N,N-diethylpropionamide, 3-isopropoxy-N,N-diethylpropionamide, 3-methoxy-N,N-dipropylpropionamide, 3-ethoxy-N,N-dipropylpropionamide, 3-n-propoxy-N,N-dipropylpropionamide and 3-isopropoxy-N,N-dipropylpropionamide.

3-Methoxy-2-methyl-N,N-dimethylpropionamide, 3-ethoxy-2-methyl-N,N-dimethylpropionamide, 3-n-propoxy-2-methyl-N,N-dimethylpropionamide, 3-isopropoxy-2-methyl-N,N-dimethylpropionamide, 3-methoxy-2-methyl-N,N-diethylpropionamide, 3-ethoxy-2-methyl-N,N-diethylpropionamide, 3-n-propoxy-2-methyl-N,N-diethylpropionamide and 3-isopropoxy-2-methyl-N,N-diethylpropionamide.

3-Methoxy-2-methyl-N,N-dipropylpropionamide, 3-ethoxy-2-methyl-N,N-dipropylpropionamide, 3-n-propoxy-2-methyl-N,N-dipropylpropionamide, 3-isopropoxy-2-methyl-N,N-dipropylpropionamide, 2-methoxy-N,N-dimethylacetamide, 2-ethoxy-N,N-dimethylacetamide, 2-n-propoxy-N,N-dimethylacetamide, 2-isopropoxy-N,N-dimethylacetamide, 2-methoxy-N,N-diethylacetamide, 2-ethoxy-N,N-diethylacetamide, 2-n-propoxy-N,N-diethylacetamide and 2-isopropoxy-N,N-diethylacetamide.

2-Methoxy-N,N-dipropylacetamide, 2-ethoxy-N,N-dipropylacetamide, 2-n-propoxy-N,N-dipropylacetamide, 2-isopropoxy-N,N-dipropylacetamide, 1-methoxy-N,N-dimethylformamide, 1-ethoxy-N,N-dimethylformamide, 1-n-propoxy-N,N-dimethylformamide, 1-isopropoxy-N,N-dimethylformamide, 1-methoxy-N,N-diethylformamide, 1-ethoxy-N,N-diethylformamide, 1-n-propoxy-N,N-diethylformamide and 1-isopropoxy-N,N-diethylformamide.

1-Methoxy-N,N-dipropylformamide, 1-ethoxy-N,N-dipropylformamide, 1-n-propoxy-N,N-dipropylformamide, 1-isopropoxy-N,N-dipropylformamide, and the like.

The compound (5) is preferably 3-alkoxy-N,N-dialkylpropionamide, particularly preferably 3-methoxy-N,N-dimethylpropionamide, in view of excellent compatibility with the polymer.

The amount of water is preferably from 50 to 500 parts, more preferably from 80 to 500 parts by mass, particularly preferably from 100 to 400 parts by mass per 100 parts by mass of the polymer.

The amount of the amide solvent (I) is preferably from 3 to 50 parts by mass, more preferably from 5 to 45 parts by mass, particularly preferably from 5 to 40 parts by mass per 100 parts by mass of the polymer. When the amount of the amide solvent (I) is at least 3 parts by mass, the compatibility with the polymer will be improved, whereby a uniform coating film is likely to be formed on the surface of an article. When the amount of the amide solvent (I) is at most 50 parts by mass, favorable washing durability will obtained.

Another medium may, for example, be water, an alcohol, a glycol, a glycol ether, a halogenated compound, a ketone, an ester, an ether, a nitrogen compound, a sulfur compound or an organic acid.

The alcohol may, for example, be methanol, ethanol, 1-propanol, 2-propanol, 1-butanol, 2-butanol, 2-methylpropanol, 1,1-dimethylethanol, 1-pentanol, 2-pentanol, 3-pentanol, 2-methyl-1-butanol, 3-methyl-1-butanol, 1,1-dimethylpropanol, 3-methyl-2-butanol, 1,2-dimethylpropanol, 1-hexanol, 2-methyl-1-pentanol, 4-methyl-2-pentanol, 2-ethyl-1-butanol, 1-heptanol, 2-heptanol, 3-heptanol or 1,4-butanediol.

The glycol and the glycol ether may, for example, be ethylene glycol, ethylene glycol monomethyl ether, ethylene glycol monoethyl ether, ethylene glycol monobutyl ether, ethylene glycol monomethyl ether acetate, ethylene glycol monoethyl ether acetate, ethylene glycol monobutyl ether acetate, hexylene glycol, propylene glycol, dipropylene glycol, dipropylene glycol monomethyl ether, propylene glycol monomethyl ether acetate, propylene glycol monomethyl ether, propylene glycol monoethyl ether, propylene glycol dimethyl ether, dipropylene glycol dimethyl ether, dipropylene glycol monoethyl ether, tripropylene glycol, tripropylene glycol monomethyl ether or polypropylene glycol.

The halogenated compound may, for example, be a halogenated hydrocarbon or a halogenated ether.

The halogenated hydrocarbon may, for example, be a hydrochlorofluorocarbon, a hydrofluorocarbon or a hydrobromocarbon.

The halogenated ether may, for example, be a hydrofluoroether.

The hydrofluoroether may, for example, be a separation-type hydrofluoroether or a non-separation-type hydrofluoroether. The separation-type hydrofluoroether is a compound wherein a R^{F} group or a perfluoroalkylene group, and an alkyl group or an alkylene group, are bonded via an etheric oxygen atom. The non-separation-type hydrofluoroether is a hydrofluoroether containing a partially fluorinated alkyl or alkylene group.

The ketone may, for example, be acetone, methyl ethyl ketone, 2-pentanone, 3-pentanone, 2-hexanone or methyl isobutyl ketone.

The ester may, for example, be methyl acetate, ethyl acetate, butyl acetate, methyl propionate, methyl lactate, ethyl lactate or pentyl lactate.

The ether may, for example, be diisopropyl ether, dioxane or THF.

The nitrogen compound may, for example, be an amide other than the amide solvent (I) such as formamide, monomethylformamide, dimethylformamide, monoethylformamide, diethylformamide, N,N-dimethylformamide, acetamide or N,N-dimethylacetamide, or N-methylpyrrolidone or pyridine.

The sulfur compound may, for example, be dimethylsulfoxide or sulfolane.

The organic acid may, for example, be acetic acid, propionic acid, malic acid or lactic acid.

The proportion of another medium is preferably at most 50 mass%, more preferably at most 40 mass%, particularly preferably from 0 to 40 mass% per 100 mass% of the aqueous medium.

### (Surfactant)

The surfactant may, for example, be a hydrocarbon type surfactant or a fluorinated surfactant, and each of which may, for example, be an anionic surfactant, a nonionic surfactant, a cationic surfactant, or an amphoteric surfactant. As the surfactant, from the viewpoint of the compatibility with additives, it is preferred to use a nonionic surfactant and an amphoteric surfactant in combination , and from the viewpoint of the adhesion to a substrate, it is preferred to use a nonionic surfactant alone or to use a nonionic surfactant and a cationic surfactant in combination.

The ratio of the nonionic surfactant to the cationic surfactant (nonionic surfactant/cationic surfactant) is preferably from 97/3 to 40/60 (mass ratio).

The nonionic surfactant is preferably at least one member selected from the group consisting of surfactants s¹ to s⁶.

### Surfactant s¹:

Surfactant s¹ is a polyoxyalkylene monoalkyl ether, a polyoxyalkylene monoalkenyl ether, a polyoxyalkylene monoalkapolyenyl ether or a polyoxyalkylene monopolyfluoroalkyl ether.

Surfactant s¹ is preferably a polyoxyalkylene monoalkyl ether, a polyoxyalkylene monoalkenyl ether or a polyoxyalkylene monopolyfluoroalkyl ether. As surfactant s¹, one type may be used alone, or two or more types may be used in combination.

As the alkyl, alkenyl, alkapolyenyl or polyfluoroalkyl group (hereinafter the alkyl, alkenyl, alkapolyenyl and polyfluoroalkyl groups may generally be referred to as a R^{S} group), a C₄₋₂₆ group is preferred. The R^{S} group may be linear or branched. The branched R^{S} group is preferably a secondary alkyl group, a secondary alkenyl group or a secondary alkapolyenyl group. The R^{S} group may have some or all of hydrogen atoms substituted by fluorine atoms.

A specific example of the R^{S} group may, for example, be an octyl group, a dodecyl group, a tetradecyl group, a hexadecyl group, a stearyl group (an octadecyl group), a behenyl group (a docosyl group), an oleyl group (a 9-octadecenyl group), a heptadecylfluorooctyl group, a tridecylfluorohexyl group, a 1 H, 1 H,2H,2H-tridecylfluorooctyl group or a 1H, 1H,2H,2H-nonafluorohexyl group.

The polyoxyalkylene (hereinafter referred to as POA) chain is preferably a chain wherein at least two of a polyoxyethylene (hereinafter referred to as POE) chain and/or a polyoxypropylene (hereinafter referred to as POP) chain are linked. The POA chain may be a chain composed of one type of POA chain or a chain composed of two or more types of POA chains. When it is composed of two or more types of POA chains, the respective POA chains are preferably linked in a block form.

Surfactant s₁ is more preferably a compound (s¹¹).

R¹⁰O[CH₂CH(CH₃)O]ᵤ-(CH₂CH₂O)ₜH (s¹¹)

wherein R¹⁰ is an alkyl group having at least 8 carbon atoms or an alkenyl group having at least 8 carbon atoms, t is an integer of from 5 to 50, and u is an integer of from 0 to 20. R¹⁰ may be one wherein some of hydrogen atoms are substituted by fluorine atoms.

When t is at least 5, the surfactant becomes soluble in water and will be uniformly dissolved in an aqueous medium, whereby the penetrating property of the water/oil repellent composition to an article will be good. When r is at most 50, hydrophilicity will be suppressed, and the water repellency will be good.

When u is at most 20, the surfactant becomes soluble in water and will be uniformly dissolved in an aqueous medium, whereby the penetrating property of the water/oil repellent composition to an article will be good.

In a case where t and s are at least 2, the POE chains and the POP chains will be linked in a block form.

R¹⁰ is preferably linear or branched.

t is preferably an integer of from 10 to 30.

u is preferably an integer of from 0 to 10.

The compound (s¹¹) may, for example, be the following compounds, whereby the POE chains and the POP chains are linked in a block form.

C₁₈H₃₇O[CH₂CH(CH₃)O]₂-(CH₂CH₂O)₃₀H,

C₁₇H₃₅O-(CH₂CH₂O)₃₀H,

C₁₆H₃₃O[CH₂CH(CH₃)O]₅-(CH₂CH₂O)₂₀H,

C₁₂H₂₅O[CH₂CH(CH₃)O]₂-(CH₂CH₂O)₁₅H,

(C₈H₁₇)(C₆H₁₃)CHO-(CH₂CH₂O)₁₅H,

C₁₀H₂₁O[CH₂CH(CH₃)O]₂-(CH₂CH₂O)₁₅H,

C₆F₁₃CH₂CH₂O-(CH₂CH₂O)₁₅H,

C₆F₁₃CH₂CH₂O[CH₂CH(CH₃)O]₂-(CH₂CH₂O)₁₅H,

C₄F₉CH₂CH₂O[CH₂CH(CH₃)O]₂-(CH₂CH₂O)₁₅H.

### Surfactant s²:

Surfactant s² is a nonionic surfactant made of a compound having at least one carbon-carbon triple bond and at least one hydroxy group in its molecule.

Surfactant s² is preferably a nonionic surfactant made of a compound having one carbon-carbon triple bond and one or two hydroxy groups in its molecule.

Surfactant s² may have a POA chain in its molecule. The POA chain may be a POE chain, a POP chain, a chain wherein a POE chain and a POP chain are randomly linked, or a chain wherein a POE chain and a POP chain are linked in a block form.

Surfactant s² is preferably compounds (s²¹) to (s²⁴).

HO-C(R¹¹)(R¹²)-C≡C-(CR¹³)(R¹⁴)-OH (s²¹)

HO-(A¹O)ᵥ-C(R¹¹)(R¹²)-C≡C-C(R¹³)(R¹⁴)-(OA²)_{w}-OH (s²²)

HO-C(R¹⁵)(R¹⁶)-C≡C-H (s²³)

HO-(A³O)ₓ-C(R¹⁵)(R¹⁶)-C≡C-H (s²⁴)

Each of A¹ to A³ is an alkylene group.

Each of v and w is an integer of at least 0, and (u+w) is an integer of at least 1.

x is an integer of at least 1.

In a case where each of v, w and x is at least 2, each of A¹ to A³ may be the same or different.

The POA chain is preferably a POE chain, a POP chain or a chain containing a POE chain and a POP chain. The number of repeating units of the POA chain is preferably from 1 to 50.

Each of R¹¹ to R¹⁶ is a hydrogen atom or an alkyl group.

The alkyl group is preferably a C₁₋₁₂ alkyl group, more preferably a C₁₋₄ alkyl group. The alkyl group may, for example, be a methyl group, an ethyl group, a propyl group, a butyl group or an isobutyl group.

The compound (s²²) is preferably a compound (s²⁵): 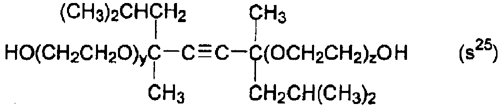 wherein each of y and z is an integer of from 0 to 100.

As the compound (s²⁵), one type may be used alone, or two or more types may be used in combination.

The compound (s²⁵) is preferably a compound wherein x and y are 0, a compound wherein the sum of y and z is from 1 to 4 on average, or a compound wherein the sum of y and z is from 10 to 30 on average.

### Surfactant s³:

Surfactant s³ is a nonionic surfactant made of a compound wherein a POE chain and a POA chain having at least two oxyalkylenes having at least 3 carbon atoms continuously linked, are linked, and both terminals are hydroxy groups.

Such a POA chain is preferably polyoxybutene (hereinafter referred to as POB) and/or a POP chain.

Surfactant s³ is preferably a compound (s³¹) or a compound (s³²):

HO(CH₂CH₂O)_{g1}(C₃H₆O)_{g2}(CH₂CH₂O)_{g3}H (s³¹)

HO(CH₂CH₂O)_{g1}(CH₂CH₂CH₂CH₂O)_{g2}(CH₂CH₂O)_{g3}H (s³²)

g1 is an integer of from 0 to 200.
g2 is an integer of from 2 to 100.
g3 is an integer of from 0 to 200.

When g1 is 0, g3 is an integer of at least 2. When g3 is 0, g1 is an integer of at least 2.

-C₃H₆O- may be -CH(CH₃)CH₂O-, -CH₂CH(CH₃)O-, or a mixture of -CH(CH₃)CH₂O- and -CH₂CH(CH₃)O-.

The POA chain is in a block-form.

Surfactant s³ may, for example, be the following compounds:

HO-(CH₂CH₂O)₁₅-(C₃H₆O)₃₅-(CH₂CH₂O)₁₅H,

HO-(CH₂CH₂O)₈-(C₃H₆O)₃₅-(CH₂CH₂O)₈H,

HO-(CH₂CH₂O)₄₅-(C₃H₆O)₁₇-(CH₂CH₂O)₄₅H,

HO-(CH₂CH₂O)₃₄-(CH₂CH₂CH₂CH₂O)₂₈-(CH₂CH₂O)₃₄H.

### Surfactant s⁴:

Surfactant s⁴ is a nonionic surfactant having an amine oxide moiety in its molecule.

Surfactant s⁴ is preferably a compound (s⁴¹):

(R¹⁷)(R¹⁸)(R¹⁹)N(→O) (s⁴¹)

Each of R¹⁷ to R¹⁹ is a monovalent hydrocarbon group.

In the present invention, a surfactant having an amine oxide (N→O) is regarded as a nonionic surfactant.

As the compound (s⁴¹), one type may be used alone, or two or more types may be used in combination.

The compound (s⁴¹) is preferably a compound (s⁴²) from the viewpoint of the dispersion stability of the copolymer (A).

(R²⁰)(CH₃)₂N(→O) (s⁴²)

R²⁰ is a C₆₋₂₂ alkyl group, a C₆₋₂₂ alkenyl group, a phenyl group having a C₆₋₂₂ alkyl group bonded thereto, a phenyl group having a C₆₋₂₂ alkenyl group bonded thereto, or a C₆₋₁₃ polyfluoroalkyl group. R²⁰ is preferably a C₈₋₂₂ alkyl group, a C₈₋₂₂ alkenyl group or a C₄₋₉ polyfluoroalkyl group.

The compound (s⁴²) may, for example, be the following compounds:

[H(CH₂)₁₂](CH₃)₂N(→O),

[H(CH₂)₁₄](CH₃)₂N(→O),

[H(CH₂)₁₆](CH₃)₂N(→O),

[H(CH₂)₁₈](CH₃)₂N(→O),

[F(CF₂)₆(CH₂)₂](CH₃)₂N(→O),

[F(CF₂)₄(CH₂)₂](CH₃)₂N(→O).

### Surfactant s⁵:

Surfactant s⁵ is a nonionic surfactant made of a polyoxyethylene mono(substituted phenyl) ether or its condensate.

The substituted phenyl group is preferably a phenyl group substituted by a monovalent hydrocarbon group, more preferably a phenyl group substituted by an alkyl group, an alkenyl group or a styryl group.

Surfactant s⁵ is preferably a condensate of a polyoxyethylenemono(alkylphenyl) ether, a condensate of a polyoxethylenemono(alkenylphenyl) ether, a polyoxyethylenemono(alkylphenyl) ether, a polyoxyethylenemono(alkenylphenyl) ether or a polyoxyethylenemono[(alkyl)(styryl)phenyl] ether.

The polyoxyethylenemono(substituted phenyl) ether or its condensate may, for example, be a formaldehyde condensate of polyoxyethylenemono(nonylphenyl) ether, polyoxyethylenemono(nonylphenyl) ether, polyoxyethylenemono(octylphenyl) ether, polyoxyethylenemono(oleylphenyl) ether, polyoxyethylenemono[(nonyl)(styryl)phenyl] ether or polyoxyethylenemono[(oleyl)(styryl)phenyl] ether.

### Surfactant s⁶:

Surfactant s⁶ is a nonionic surfactant made of a fatty acid ester of a polyol.

The polyol represents glycerol, sorbitan, sorbit, polyglycerin, polyethylene glycol, polyoxyethylene glyceryl ether, polyoxyethylenesorbitan ether or polyoxyethylenesorbit ether.

Surfactant s⁶ may be a 1:1 (molar ratio) ester of stearic acid and polyethylene glycol, a 1:4 (molar ratio) ester of an ether of sorbit with polyethylene glycol and oleic acid, a 1:1 (molar ratio) ester of an ether of polyoxyethylene glycol with sorbitan and stearic acid, a 1:1 (molar ratio) ester of an ether of polyethylene glycol with sorbitan and oleic acid, a 1:1 (molar ratio) ester of dodecanoic acid and sorbitan, a 1:1 or 2:1 (molar ratio) ester of oleic acid and decaglycerol, or a 1:1 or 2:1 (molar ratio) ester of stearic acid and decaglycerol.

### Surfactant s⁷:

In a case where the surfactant contains a cationic surfactant, such a cationic surfactant is preferably surfactant s⁷.

Surfactant s⁷ is a cationic surfactant in a substituted ammonium salt form.

Surfactant s⁷ is preferably an ammonium salt having at least one hydrogen atom bonded to the nitrogen atom substituted by an alkyl group, an alkenyl group or a POA chain having a terminal hydroxy group, more preferably a compound (s⁷¹):

[(R²¹)₄N⁺]·X⁻ (s⁷¹)

R²¹ is a hydrogen atom, a C₁₋₂₂ alkyl group, a C₂₋₂₂ alkenyl group, a C₁₋₉ polyfluoroalkyl group or a POA chain having a terminal hydroxy group. Four R²¹ may be the same or different, provided that the four R²¹ are not simultaneously hydrogen atoms.

R²¹ is preferably a C₆₋₂₂ long chain alkyl group, a C₆₋₂₂ long chain alkenyl group or a C₁₋₉ fluoroalkyl group.

In a case where R²¹ is an alkyl group other than the long chain alkyl group, R²¹ is preferably a methyl group or an ethyl group.

In a case where R²¹ is a POA chain having a terminal hydroxy group, the POA chain is preferably a POE chain.

X- is a counter ion.

X⁻ is preferably a chlorine ion, an ethylsulfuric acid ion or an acetic acid ion.

The compound (s⁷¹) may, for example, be monostearyl trimethylammonium chloride, monostearyldimethylmonoethylammonium ethylsulfate, mono(stearyl)monomethyldi(polyethylene glycol) ammonium chloride, monofluorohexyl trimethylammonium chloride, di(beef tallow alkyl)dimethylammonium chloride or dimethylmonococonutamine acetate.

### Surfactant s⁸:

In a case where the surfactant contains an amphoteric surfactant, such an amphoteric surfactant is preferably surfactant s⁸.

Surfactant s⁸ is an alanine, an imidazolinium betaine, an amide betaine or an acetic acid betaine.

The hydrophobic group is preferably a C₆₋₂₂ long chain alkyl group, a C₆₋₂₂ long chain alkenyl group or a C₁₋₉ polyfluoroalkyl group.

Surfactant s⁸ may, for example, be dodecyl betaine, stearyl betaine, dodecylcarboxymethylhydroxyethylimidazolinium betaine, dodecyldimethylaminoacetic acid betaine or a fatty acid amide propyldimethylaminoacetic acid betaine.

Specific examples include a lauryl dimethylaminoacetic acid betaine aqueous solution (NIKKOLAM-301 manufactured by Nikko Chemicals Co., Ltd.), a coconut oil fatty acid amidopropyldimethylaminoacetic acid betaine solution (NIKKOLAM-3130N manufactured by Nikko Chemicals Co., Ltd.) and a sodium N-cocoyl-N-carboxymethyl-N-hydroxyethylethylenediamine aqueous solution (NIKKOLAM-101 manufactured by Nikko Chemicals Co., Ltd.).

### Surfactant s⁹:

Surfactant s⁹ is a polymer surfactant made of a block copolymer or a random copolymer of a hydrophilic monomer with a hydrocarbon type hydrophobic monomer and/or a fluorinated hydrophobic monomer, or a hydrophobically modified product of a hydrophilic copolymer.

Surfactant s⁹ may, for example, be a block or random copolymer of polyethylene glycol (meth)acrylate with a long chain alkyl acrylate, a block or random copolymer of polyethylene glycol (meth)acrylate with a fluoro(meth)acrylate, a block or random copolymer of vinyl acetate with a long chain alkyl vinyl ether, a block or random copolymer of vinyl acetate with a long chain alkyl vinyl ester, a polymer of styrene with maleic anhydride, a condensate of polyvinyl alcohol with stearic acid, a condensate of polyvinyl alcohol with stearyl mercaptan, a condensate of polyallylamine with stearic acid, a condensate of polyethyleneimine with stearyl alcohol, methylcellulose, hydroxypropyl methylcellulose or hydroxyethyl methylcellulose.

Commercial products of surfactant s⁹ include, for example, MP polymer (Product No.: MP-103 or MP-203) manufactured by Kuraray corporation, SMA resins manufactured by Elf Atochem Inc, METOLOSE manufactured by Shin-Etsu Chemical Co., Ltd., EPOMIN RP manufactured by NIPPON SHOKUBAI Co., Ltd. and Surflon (Product No.: S-381 or S-393) manufactured by AGC Seimi Chemical Co., Ltd.

In a case where the medium is an organic solvent, or the mixing ratio of an organic solvent is large, surfactant s⁹ is preferably surfactant s⁹¹.

Surfactant s⁹¹: A polymer surfactant made of a block copolymer or random copolymer of a lipophilic monomer with a fluorinated monomer (or its polyfluoroalkyl modified product).

Surfactant s⁹¹ may, for example, be a copolymer of an alkyl acrylate with a fluoro(meth)acrylate, or a copolymer of an alkyl vinyl ether with a fluoroakyl vinyl ether.

Commercial products of surfactant s⁹¹ include Surflon (Product No.: S-383 or SC-100 series) manufactured by AGC Seimi Chemical Co., Ltd.

As a combination of surfactants, from the viewpoint of the adhesion to a substrate and the stability of the obtained emulsion, preferred is a combination of surfactants s¹ and s², a combination of surfactants s¹ and s³, a combination of surfactants s¹, s² and s³, a combination of surfactants s¹ and/or s² and s⁷, a combination of surfactants s¹, s³ and s⁷ or a combination of surfactants s¹, s², s³ and s⁷, and more preferred is the above combination wherein the surfactant s⁷ is the compound (s⁷¹). From the viewpoint of the compatibility with additives, preferred is a combination of surfactants s¹ and/or s² and s⁸, or a combination of surfactants s¹, s², s³ and s⁸.

As the surfactant, it is preferred to use a surfactant having HLB of at most 12 in combination, in a case where the penetrating property to an article (such as a fiber product) is to be imparted. HLB is a value representing the degree of the affinity of a surfactant to water and oil, and is represented on a scale of from 0 to 20. A smaller value indicates lipophilicity, and a larger value indicates hydrophilicity. Several means have been proposed to calculate this value. For example, by the Griffin's method, it is defined as 20xthe total formula weight of the hydrophilic portion/the molecular weight.

As surfactants having HLB of at most 12, the following are preferred.

Surfactant s¹: The compound (s¹¹) wherein s+r is an integer of from 2 to 10 (preferably from 3 to 8), and r is an integer of from 2 to 10 (preferably from 3 to 8).

Surfactant s²: The compound (s²⁵) wherein x+y is at most 4.

Surfactant s⁶: A sorbitan fatty acid ester, wherein the fatty acid has from 5 to 30 carbon atoms. Specific examples include polyoxyethylene 2 mol adduct oleyl ether (NIKKOL BO-2V manufactured by Nikko Chemicals Co., Ltd., HLB: 7.5), polyoxyethylene 7 mol adduct oleyl ether (NIKKOL BO-7V manufactured by Nikko Chemicals Co., Ltd., HLB: 10.5), polyoxyethylene 5 mol adduct behenyl ether (NIKKOL BB-5 manufactured by Nikko Chemicals Co., Ltd., HLB: 10.5), polyoxyethylene 4 mol adduct C12-15 alkyl ether (NIKKOL BD-4 manufactured by Nikko Chemicals Co., Ltd., HLB: 10.5), polyoxyethylene 1 mol polyoxypropylene 4 mol adduct cetyl ether (NIKKOL PBC-31 manufactured by Nikko Chemicals Co., Ltd., HLB: 9.5), 2,4,7,9-tetramethyl-5-decyne-4,7-diol ethylene oxide 3.5 mol adduct (Surfynol 440 manufactured by Nissin Chemical Industry Co., Ltd., HLB: 8), 2,4,7,9-tetramethyl-5-decyne-4,7-diol ethylene oxide 1.3 mol adduct (Surfynol 420 manufactured by Nissin Chemical Industry Co., Ltd., HLB: 4), 2,4,7,9-tetramethyl-5-decyne-4,7-diol (Surfynol 104 manufactured by Nissin Chemical Industry Co., Ltd., HLB: 4) and sorbitan palmitate (NONION PP-40R manufactured by NOF Corporation, HLB: 6.7).

The amount of the surfactant is preferably from 1 to 10 parts by mass, more preferably from 1 to 9 parts by mass, particularly preferably from 1 to 7 parts by mass based on the polymer (100 parts by mass).

### (Additives)

The additives include, for example, a penetrant, a defoamer, a water-absorbing agent, an antistatic agent, an antistatic polymer, an anticrease agent, a texture-adjusting agent, a film-forming assistant, a water-soluble polymer (such as polyacrylamide or polyvinyl alcohol), a thermosetting agent (such as a melamine resin, a urethane resin, a triazine ring-containing compound or an isocyanate-type compound), an epoxy curing agent (such as isophthalic acid dihydrazide, adipic acid dihydrazide, sebacic acid dihydrazide, dodecanedioic acid dihydrazide, 1,6-hexamethylenebis(N,N-dimethylsemicarbazide), 1,1,1',1'-tetramethyl-4,4'-(methylene-di-p-phenylene) disemicarbazide or spiroglycol), a thermosetting catalyst, a crosslinking catalyst (such as an organic acid or ammonium chloride), a synthetic resin, a fiber-stabilizer and inorganic fine particles.

Further, the water/oil repellent composition of the present invention may contain a copolymer capable of exhibiting water repellency and/or oil repellency (e.g. a commercially available water repellent, a commercially available oil repellent, a commercially available water/oil repellent or a commercially available SR (soil release) agent) other than the above polymer, a water-repellent compound having no fluorine atom, or the like as the case requires. The water-repellent compound having no fluorine atom may, for example, be a paraffin type compound, an aliphatic amide type compound, an alkylethylene urea compound or a silicone compound.

### (Method for producing water/oil repellent composition)

The water/oil repellent composition of the present invention is produced by the following method.

A method which comprises polymerizing monomer components comprising the monomer (a) and the monomer (b) and further including the monomer (c), the monomer (d) and the monomer (e) as the case requires, in an aqueous medium containing water and the amide solvent (I) and containing another medium as the case requires, in the presence of a surfactant and a polymerization initiator to obtain a dispersion or emulsion of the polymer, and adding another medium, surfactant and additives, as the case requires.

The polymerization method may, for example, be a dispersion polymerization method, an emulsion polymerization method or a suspension polymerization method, and emulsion polymerization is preferred. Further, the polymerization method may be polymerization all at once or multistage polymerization.

The method for producing a water/oil repellent composition is preferably a method wherein monomer components comprising the monomer (a) and the monomer (b) and further including the monomer (c), the monomer (d) and the monomer (e) as the case requires, are polymerized by emulsion polymerization in an aqueous medium containing water and the amide solvent (I) and containing another medium as the case requires, in the presence of a surfactant and a polymerization initiator to obtain an emulsion of the polymer

With a view to improving the yield of the polymer, it is preferred to pre-emulsify the mixture comprising the monomers, the surfactant and the aqueous medium, prior to the emulsion polymerization. For example a mixture comprising the monomers, the surfactant and the aqueous medium is mixed and dispersed by an ultrasonic stirring apparatus, a homomixer or a high pressure emulsifier.

### (Polymerization initiator)

The polymerization initiator may, for example, be a thermal polymerization initiator, a photopolymerization initiator, a radiation polymerization initiator, a radical polymerization initiator or an ionic polymerization initiator, and a water-soluble or oil-soluble radical polymerization initiator is preferred.

As the radical polymerization initiator, a common initiator such as an azo type polymerization initiator, a peroxide type polymerization initiator or a redox type initiator is employed depending upon the polymerization temperature. As the radical polymerization initiator, an azo type compound is particularly preferred, and in a case where polymerization is carried out in an aqueous medium, a salt of an azo type compound is more preferred. The azo type compound and the salt of an azo type compound may be 2,2'-azobis(4-methoxy-2,4-dimethylvaleronitrile), 2,2'-azobis(2,4-dimethylvaleronitrile), dimethyl 2,2'-azobis(2-methylpropionate), 2,2'-azobis(2-methylbutyronitrile), 2,2'-azobis(2-methylpropionamide) dihydrochloride, 2,2'-azobis[2-(2-imidazolin-2-yl)propane] disulfate, 2,2'-azobis[2-(2-imidazolin-2-yl)propane] dihydrochloride, 2,2'-azobis[2-(2-imidazolin-2-yl)propane] acetate, 2,2'-azobis[N-(2-carboxyethyl)2-methylpropionamidine] hydrate or 2,2'-azobis(1-imino-1-pyrrolidino-2-methylpropane) dihydrochloride. The polymerization temperature is preferably from 20 to 150°C.

The amount of the polymerization initiator is preferably from 0.1 to 5 parts by mass, more preferably from 0.1 to 3 parts by mass, per 100 parts by mass of the monomer components.

### (Molecular weight-controlling agent)

At the time of polymerization of the monomer components, a molecular weight-controlling agent may be employed. The molecular weight-controlling agent is preferably an aromatic compound, a mercapto alcohol or a mercaptan, particularly preferably an alkylmercaptan. The molecular weight-controlling agent may, for example, be a multifunctional mercapto compound such as mercaptoethanol, n-octylmercaptan, n-dodecylmercaptan, t-dodecylmercaptan, stearylmercaptan, thioglycerol, α-methylstyrene dimer (CH₂=C(Ph)CH₂C(CH₃)₂Ph wherein Ph is a phenyl group), diethylene glycolbis(3-mercaptobutyrate), pentaerythritol tetrakis(3-mercaptobutyrate), 2,4,6-trimercaptotriazine, or 1,3,5-tris(3-mercaptobutyloxyethyl)-1 ,3,5-triazine-2,4,6(1 H,3H,5H)-trione.

The amount of addition of the molecular weight-controlling agent is preferably from 0 to 5 parts by mass, more preferably from 0 to 2 parts by mass per 100 parts by mass of the monomer components.

The proportion of the monomers (a) to (e) is the same as the proportion of the structural units based on the monomers (a) to (e) since the monomers are polymerized substantially 100%, and the preferred embodiments are also the same.

As the aqueous medium, water and the above amide solvent (I) and as the case requires, the above another medium may be used.

In production of the water/oil repellent composition, the amount of water is preferably from 50 to 500 parts by mass, more preferably from 80 to 500 parts by mass, particularly preferably from 100 to 400 parts by mass per 100 parts by mass of the monomer components.

The amount of the amide solvent (I) is preferably from 3 to 50 parts by mass, more preferably from 5 to 45 parts by mass, particularly preferably from 5 to 40 parts by mass per 100 parts by mass of the monomer components. When the amount of the amide solvent (I) is at least 3 parts by mass, the compatibility with the polymer will be improved, and a uniform coating film is likely to be formed on the surface of an article. When the amount of the amide solvent (I) is at most 50 parts by mass, favorable washing durability will be obtained.

The mass ratio of water to the amide solvent (I) (water/amide solvent (I)) is preferably from 1 to 52, more preferably from 1 to 40, particularly preferably from 1 to 35. When the mass ratio of water/amide solvent (I) is at least 1, the emulsified state will be favorable and the particle size tends to be small, whereby an ideal process state can be realized, and favorable washing durability will be obtained. When the mass ratio of water/amide solvent (I) is at most 52, infiltration of a coating liquid to form a moisture-permeable waterproofing film or the like can more easily be suppressed.

In the water/oil repellent composition of the present invention, it is preferred that the polymer is dispersed in the form of fine particles in the aqueous medium.

The average particle size of the polymer particles is preferably from 10 to 1,000 nm, more preferably from 10 to 300 nm, particularly preferably from 10 to 250 nm. When the average particle size is within such a range, it will be unnecessary to use a surfactant or the like in a large amount, the water repellency will be good, and when dyed cloths are treated, no color fading will result, and the dispersed particles can stably be present in the aqueous medium without precipitation. The average particle size of the polymer fine particles can be measured by e.g. a dynamic light-scattering apparatus or an electron microscope.

To the emulsion obtained by emulsion polymerization, a surfactant or an additive may be newly added. The surfactant to be newly added may be a surfactant different from the surfactant used at the time of polymerization. The additive is usually added to the emulsion obtained by polymerization, rather than being blended in the aqueous medium at the time of polymerization. Further, a surfactant or an additive may be newly added after the following dilution of the emulsion.

The emulsion obtained by emulsion polymerization may be used as diluted. Dilution of the emulsion is carried out by adding water, the amide solvent (I) or another liquid medium to the emulsion obtained by polymerization. Dilution with water is particularly preferred. The liquid medium as a diluting medium may be a liquid medium having compatibility with the aqueous medium in the emulsion obtained by polymerization.

At the time of dilution of the emulsion with water, dilution with the amide solvent (I) is not essential. When the emulsion is diluted with water, the same aqueous medium composition as the composition of the aqueous medium used for the polymerization is not necessary, and the content of the amide solvent (I) in the aqueous medium in the emulsion after dilution may be lower than the content of the amide solvent (I) in the aqueous medium at the time of polymerization. Here, at the time of dilution with water, usually the proportion of the amide solvent (I) to the polymerization does not change. Also when a liquid medium other than the amide solvent (I) is used in combination at the time of polymerization, addition of such a liquid medium at the time of dilution with water is not essential.

Immediately after the production of the water/oil repellent composition, the solid content concentration of the emulsion is preferably from 20 to 40 mass% based on the emulsion (100 mass%). Here, the solid content concentration is a concentration including the surfactant in addition to the polymer. The content of the polymer in the emulsion is preferably from 18 to 40 mass% immediately after the production of the water/oil repellent composition.

Treatment of an article with the water/oil repellent composition of the present invention is usually carried out by diluting the emulsion obtained by polymerization with e.g. water, adding a surfactant or an additive to the emulsion after diluted as the case requires, and using the obtained composition. The composition obtained by e.g. dilution is also the water/oil repellent composition of the present invention.

At the time of treating an article, the solid content concentration of the water/oil repellent composition of the present invention is preferably from 0.2 to 5 mass% in the water/oil repellent composition (100 mass%).

The solid content concentration of the emulsion or the water/oil repellent composition is calculated from the mass of the emulsion or the water/oil repellent composition before heating and the mass after drying for 4 hours by a counter current canal dryer at 120°C.

### (Effect and function)

The water/oil repellent composition of the present invention as described in the foregoing, contains the polymer which has structural units based on the monomer (a), whereby it is possible to impart sufficient water/oil repellency to the surface of an article.

Further, the water/oil repellent composition of the present invention contains an aqueous medium containing water and the amide solvent (I), whereby it is possible to impart sufficient washing durability to the surface of an article, and it is possible to suppress infiltration of a coating liquid to form a moisture-permeable waterproofing film or the like. It is estimated that since the aqueous medium containing water and the amide solvent (I) has favorable compatibility with the polymer, a uniform coating film will be formed, and when a crosslinking agent (curing agent) is further contained, external crosslinking of the polymer will be accelerated, whereby favorable washing durability will be obtained, and gaps into which a solvent (such as DMF or toluene) of the coating liquid infiltrates are hardly formed, whereby infiltration can be suppressed.

Further, in the water/oil repellent composition of the present invention, the polymer has no structural units based on a monomer having a R^{F} group having at least 7 carbon atoms, whereby the content (content in a case where the solid content concentration is 20%) of perfluorooctanoic acid (PFOA) and perfluorooctanesulfonic acid (PFOS), and their precursors and analogues, of which the effects on the environment are pointed out, can be reduced to a level of not higher than the detection limit as an analytical value of LC-MS/MS by the method disclosed in WO2009/081822.

### <Article>

The article of the present invention is one having its surface treated with the water/oil repellent composition of the present invention. By the surface treatment with the water/oil repellent composition of the present invention, a coating film of the polymer is formed on the treated surface of the article, and the water/oil repellency is imparted to the surface of the article.

Articles to be treated include, for example, fibers (natural fibers, synthetic fibers, mixed fibers, etc.), various fiber products, nonwoven fabrics, resins, paper, leather, metals, stones, concrete, gypsum and glass.

The treating method may, for example, be a method of coating an article with a coating liquid containing the water/oil repellent composition by a known coating method, followed by drying, or a method of dipping an article in a coating liquid containing the water/oil repellent composition, followed by drying.

Further, after treatment with the water/oil repellent composition of the present invention, antistatic finish, softening finish, antibacterial finish, deodorant finish or waterproofing finish may, for example, be carried out.

The waterproofing finish may be processing to provide a waterproofing film. The waterproofing film may, for example, be a porous film made of a urethane resin or an acrylic resin, a non-porous film made of a urethane resin or an acrylic resin, a polytetrafluoroethylene film or a moisture-permeable waterproofing film made of a combination thereof. The article of the present invention is preferably one having its surface treated with the water/oil repellent composition of the present invention and has the moisture-permeable waterproofing film formed thereon.

When a fiber product having its surface treated with the water/oil repellent composition of the present invention further has the moisture-permeable waterproofing film formed thereon, the peel strength of the moisture-permeable waterproofing film tends to be high, and separation of the resin film hardly occurs.

By treating an article by means of the water/oil repellent composition of the present invention, a coating film of the polymer is formed on the surface of the article, whereby water/oil repellency can be imparted to the article. Further, excellent adhesion to the substrate surface is achieved and it is possible to impart the water/oil repellency even by curing at a low temperature. Further, it is possible to maintain the performance at the initial stage of the processing stably without substantial deterioration of the performance by abrasion or washing. Further, when paper is treated, it is possible to impart an excellent sizing property and water/oil repellency to the paper even under a low temperature drying condition. In a case where it is applied to the surface of a resin, glass or a metal, it is possible to form a water/oil repellent coating film which is excellent in the adhesion to the article and which is excellent in the film-forming property.

### EXAMPLES

Now, the present invention will be described in detail with reference to Examples, but it should be understood that the present invention is by no means thereby restricted.

Examples 9 to 11 are Examples of the present invention, Examples 1 to 8 are Comparative Examples, and Example 12 is a Reference Example.

### <Physical properties of polymer>

With respect to a polymer recovered by the following recovery method, its molecular weight was measured.

### (Recovery method)

6 g of an emulsion was dropped into 60 g of 2-propanol (hereinafter referred to as IPA), followed by stirring to precipitate solid. After carrying out centrifugal separation at 3,000 rpm for 5 minutes, the obtained solid was separated. 12 g of IPA was again added, followed by thorough stirring. After carrying out centrifugal separation at 3,000 rpm for 5 minutes, the obtained solid was separated from the supernatant, followed by vacuum drying at 35°C overnight to obtain a polymer.

### (Molecular weight)

The recovered polymer was dissolved in THF to obtain a 1 mass% solution, which was passed through a 0.2 µm filter to obtain a sample for analysis. With respect to the sample, the number average molecular weight (Mn) and the mass average molecular weight (Mw) were measured. The conditions for the measurement were as follows.
Apparatus: HLC-8220GPC manufactured by TOSOH CORPORATION
Column: One having TSKgel MultiporerHXL-M connected in series.
Measuring temperature: 23°C
Injected amount: 0.2 µL
Outflow rate: 1 mL/min
Standard sample: EasiCal PM-2 manufactured by Polymer Laboratories
Eluent: THF

### <Evaluation for water/oil repellency>

### (Water repellency)

With respect to a test cloth, the water repellency was evaluated in accordance with the spray test in JIS L1092-1992. The water repellency is represented by five grades of from 1 to 5. Here, the higher the grade number, the better the water repellency. One with grade 3 or higher is regarded as exhibiting water repellency. A grade having +(-) attached shows that the property is slightly better (worse) than the standard property of that grade. A score having two grades indicated with "-" shows that the property is in the middle of the two grades, and that the property is worse than the property of the higher grade having "-" attached and better than the property of the lower grade having "+" attached.

### (Washing durability)

With respect to a test cloth, washing was repeated 20 times or 50 times in accordance with the water washing method in JIS L0217 Appendix 103. After the washing, it was dried in air overnight in a room having a room temperature of 25°C under a humidity of 60%, whereupon the water repellency was evaluated as described above.

### (Oil repellency)

With respect to a test cloth, the oil repellency was evaluated in accordance with the test method in AATCC-TM118-1966. The oil repellency is represented by grades shown in Table 1. A grade having +(-) attached shows that the property is slightly better (worse). A score having two grades indicated with "-" shows that the property is in the middle of the two grades, and that the property is worse than the property of the higher grade having "-" attached and better than the property of the lower grade having "+" attached.

**[TABLE 1]**

| Oil repellency No. | Test solution | Surface tension |
|---|---|---|
| | | mN/m (25°C) |
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | 65 Parts of nujol/ 35 parts of hexadecane | 29.6 |
| 1 | Nujol | 31.2 |
| 0 | Less than 1 | - |

### (Washing durability)

With respect to a test cloth, washing was repeated 20 times or 50 times in accordance with the water washing method in JIS L0217 Appendix 103. After the washing, it was dried in air overnight in a room having a room temperature of 25°C under a humidity of 60%, whereupon the oil repellency was evaluated as described above.

### <Applicability to coating liquid>

### (DMF repellency)

0.05 mL of DMF was placed on five positions on a test cloth. The time until DMF completely infiltrated into the test cloth was measured with an upper limit of 300 seconds to determine the average value. The time longer than 300 seconds indicates the best performance, and the shorter the time, the more the coating liquid is likely to infiltrate.

### (Toluene repellency)

0.02 mL of toluene was placed on five positions on a test cloth. The time until toluene completely infiltrated into the test cloth was measured with an upper limit of 300 seconds to determine the average value. The time longer than 300 seconds indicates the best performance, and the shorter the time, the more the coating liquid is likely to infiltrate.

### (Peel strength)

A heat seal tape was bonded to a test cloth by hot press. Using autograph AGS-X (manufactured by Shimadzu Corporation), the force (peel strength) applied when the 2.5 cm tape was peeled was measured. The higher the peel strength, the less the moisture-permeable waterproofing film or the like formed by the coating liquid is likely to be peeled.

### <Abbreviations>

### (Monomer (a))

C6FMA:F(CF₂)₆CH₂CH₂OC(O)C(CH₃)=CH₂

### (Monomer (b))

VCM: Vinyl chloride

### (Monomer (c))

D-BI: 3,5-Dimethylpyrazole adduct of 2-isocyanatoethyl (meth)acrylate
HEMA: 2-Hydroxyethyl methacrylate
NMAM: N-methylolacrylamide

### (Monomer (d))

STA: Stearyl acrylate

### (Monomer (e))

CmFA: F(CF₂)ₘCH₂CH₂OC(O)CH=CH₂ (a mixture wherein m is from 6 to 16, containing at least 99 mass% of ones wherein m is at least 8, and the average value of m is 9)
CHMA: Cyclohexyl methacrylate
iBoMA: Isobornyl methacrylate
DOM: Dioctyl maleate

### (Surfactant)

PEO-20: 10 mass% aqueous solution of polyoxyethylene oleyl ether (Emulgen E430 manufactured by Kao Corporation, ethylene oxide about 26 mol adduct)
SFY: 10 mass% aqueous solution of 2,4,7,9-tetramethyl-5-decyne-4,7diol ethylene oxide adduct (Surfynol 465 manufactured by Nissin Chemical Industry Co., Ltd., added moles of ethylene oxide: 10)
P204: 10 mass% aqueous solution of ethylene oxide propylene oxide polymer (PRONONE 204 manufactured by NOF Corporation, proportion of ethylene oxide: 40 mass%)
TMAC: 10 mass% aqueous solution of stearyl trimethylammonium chloride

### (Molecular weight-controlling agent)

nDoSH: n-Dodecylmercaptan

### (Polymerization initiator)

VA-061: 10 mass% aqueous solution of acetate of 2,2'-azobis[2-(2-imidazolin-2-yl)propane]

### (Medium)

MeAM: 3-Methoxy-N,N-dimethylpropionamide
BuAM: 3-butoxy-N,N-dimethylpropionamide
DPG: Dipropylene glycol
TPG: Tripropylene glycol
DPGMME: Dipropylene glycol monomethyl ether
MMB: 3-Methoxy-3-methyl-1-butanol
Water: Deionized water

### [Example 1]

Into a glass beaker, 97.8 g of C6FMA, 15.6 g of STA, 6.7 g of D-BI, 66.7 g of CHMA, 2.2 g of HEMA, 2.2 g of nDOSH, 68.9 g of PEO-20, 20.0 g of P-204, 20.0 g of TMAC, 66.7 g of DPG and 332.0 g of water were introduced, heated at 60°C for 30 minutes and mixed by means of a homomixer (Biomixer manufactured by NIHONSEIKI KAISHA LTD.) to obtain a mixed liquid.

The obtained mixed liquid was treated at 40 MPa by means of a high pressure emulsifying machine (Mini-Lab manufactured by APV Rannie) while maintaining the temperature at 60°C to obtain an emulsified liquid. The obtained emulsified liquid was put into a stainless steel reactor and cooled to a temperature of at most 40°C. 17.8 g of VA-061A was added, and the vapor phase was substituted by nitrogen, 33.4 g of VCM was introduced, and a polymerization reaction was carried out at 60°C for 15 hours with stirring, to obtain an emulsion of a polymer. The proportions of structural units based on the respective monomers and the proportions of media are shown in Table 3.

The emulsion of a polymer was diluted with running water in Yokohama city to adjust the solid content concentration to be 1.0 mass%. Then, a melamine resin crosslinking agent (BECKAMINE manufactured by DIC Corporation) and an acid catalyst (BECKAMINE ACX manufactured by DIC Corporation) were added so that the respective concentrations became 0.3 mass%. Further, a blocked isocyanate crosslinking agent (Trixen DP9C/214 manufactured by Baxenden) was added so that its concentration became 1.0 mass%, an ammonium chloride 10 mass% aqueous solution was added so that its concentration became 5.0 mass%, and 2,4,7,9-tetramethyl-5-decyne-4,7-diol ethylene oxide adduct (ethylene oxide 1.3 mol adduct, HLB: 4) was added so that its concentration became 1.0 mass% to obtain a water/oil repellent composition.

In the water/oil repellent composition, a base cloth (nylon high density taffeta) was dipped by a padding method, and squeezed so that the wet pickup became 60 mass%. This base cloth was heated at 110°C for 90 seconds and at 170°C for 60 seconds, and left in a room at 25°C under a humidity of 60% overnight to prepare a test cloth. With respect to the test cloth, evaluation was carried out. The results are shown in Table 4.

### [Examples 2 to 5]

An emulsion of a polymer and a test cloth were obtained in the same manner as in Example 1 except that the charged amounts of the respective raw materials were as identified in Table 2. The proportions of structural units based on the respective monomers and the proportions of the media are shown in Table 3. The results of evaluation of the test cloth are shown in Table 4. In Example 3, a water/oil repellent composition was obtained without addition of the blocked isocyanate crosslinking agent, ammonium chloride and 2,4,7,9-tetramethyl-5-decyne-4,7-diol ethylene oxide adduct.

### [Examples 6 to 11]

An emulsion of a polymer was obtained in the same manner as in Example 1 except that the charged amounts of the respective raw materials were as identified in Table 2. A water/oil repellent composition was prepared and a test cloth were obtained in the same manner as in Example 1 except that the obtained polymer was used and that MEIKANATE TP-10 manufactured by Meisei Chemical Works as a blocked isocyanate crosslinking agent was added so that its concentration became 1.0 mass%, an ammonium chloride 10 mass% aqueous solution was added so that its concentration became 5.0 mass% and 2,4,7,9-tetramethyl-5-decyne-4,7-diol ethylene oxide adduct (ethylene oxide 1.3 mol adduct, HLB: 4) was added so that its concentration became 1.0 mass%. The proportions of structural units based on the respective monomers and the proportions of the media are shown in Table 3. The results of evaluation of the test cloth are shown in Table 4.

### [Example 12]

An emulsion of a polymer was obtained in the same manner as in Example 1 except that the charged amounts of the respective raw materials were as identified in Table 2. A test cloth was obtained in the same manner as in Example 1 except that only the melamine resin crosslinking agent and the acid catalyst in Example 1 were used as additives. The proportions of structural units based on the respective monomers and the proportions of the media are shown in Table 3. The results of evaluation of the test cloth are shown in Table 4.

**Table 2**

| Charge (g) | | Ex. | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| (a) | C6FMA | 97.8 | 110.8 | 142.3 | 142.3 | 142.3 | 142.3 | 142.3 | 142.3 | 142.3 | 164.5 | 177.7 | |
| (e) | CmFA | | | | | | | | | | | | 172.2 |
| (d) | STA | 15.6 | 33.3 | 15.6 | 15.6 | 15.6 | 15.6 | 15.6 | 15.6 | 15.6 | 15.6 | 16.8 | |
| (b) | VCM | 33.4 | 51.0 | 33.4 | 33.4 | 33.4 | 33.4 | 33.4 | 33.4 | 33.4 | 33.4 | 36.0 | 49.2 |
| (c) | D-BI | 6.7 | | 6.7 | 6.7 | 6.7 | 6.7 | 6.7 | 6.7 | 6.7 | 6.7 | 7.2 | |
| (c) | HEMA | 2.2 | 2.2 | 2.2 | 2.2 | 2.2 | 2.2 | 2.2 | 2.2 | 2.2 | 2.2 | 2.4 | |
| (e) | CHMA | 66.7 | | 22.2 | 22.2 | 22.2 | 22.2 | 22.2 | 22.2 | 22.2 | | | |
| (e) | iBoMA | | 22.2 | | | | | | | | | | |
| (c) | NMAM | | 4.4 | | | | | | | | | | 6.6 |
| (e) | DOM | | | | | | | | | | | | 15.5 |
| - | PEO-20 | 68.9 | 68.7 | 68.9 | 68.9 | 68.9 | 68.9 | 68.9 | 68.9 | 68.9 | 68.9 | 74.4 | 88.6 |
| - | SFY | | | | | | | | | | | | 19.7 |
| - | P204 | 20.0 | 20.0 | 20.0 | 20.0 | 20.0 | 20.0 | 20.0 | 20.0 | 20.0 | 20.0 | 21.6 | 22.1 |
| - | TMAC | 20.0 | 20.0 | 20.0 | 20.0 | 20.0 | 20.0 | 20.0 | 20.0 | 20.0 | 20.0 | 21.6 | |
| - | AM301 | | | | | | | | | | | | |
| - | nDoSH | 2.2 | 2.2 | 2.2 | 2.2 | 2.2 | 2.2 | 2.2 | 2.2 | 2.2 | 2.2 | 2.4 | 2.5 |
| - | VA-061 A | 17.8 | 17.8 | 17.8 | 17.8 | 17.8 | 17.8 | 17.8 | 17.8 | 17.8 | 17.8 | 19.2 | 19.7 |
| - | MeAM | | | | | | | | | 66.7 | 66.7 | 12.0 | |
| - | BuAM | | | | | | | | 66.7 | | | | |
| - | DPG | 66.7 | 66.5 | 66.7 | 66.7 | | | | | | | | 73.8 |
| - | TPG | | | | | 66.7 | | | | | | | |
| - | DPGMME | | | | | | 66.7 | | | | | | |
| - | MMB | | | | | | | 66.7 | | | | | |
| - | Water | 332.0 | 331.0 | 332.0 | 332.0 | 332.0 | 332.0 | 332.0 | 332.0 | 332.0 | 332.0 | 358.5 | 280.2 |
| Solid content (mass%) | | 31.6 | 31.8 | 30.8 | 30.9 | 31.2 | 31.2 | 30.9 | 30.9 | 31.3 | 31.6 | 34.2 | 34.8 |

**Table 3**

| | | Ex. | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Proportion (mass%) of monomer based on monomer components (100 mass%) | | | | | | | | | | | | | |
| (a) | C6FMA | 44 | 50 | 64 | 64 | 64 | 64 | 64 | 64 | 64 | 74 | 74 | |
| (e) | CmFA | | | | | | | | | | | | 70 |
| (d) | STA | 7 | 15 | 7 | 7 | 7 | 7 | 7 | 7 | 7 | 7 | 7 | |
| (b) | VCM | 15 | 15 | 15 | 15 | 15 | 15 | 15 | 15 | 15 | 15 | 15 | 21 |
| (c) | D-BI | 3 | | 3 | 3 | 3 | 3 | 3 | 3 | 3 | 3 | 3 | |
| (c) | HEMA | 1 | 1 | 1 | 1 | 1 | 1 | 1 | 1 | 1 | 1 | 1 | |
| (e) | CHMA | 30 | | 10 | 10 | 10 | 10 | 10 | 10 | 10 | | | |
| (e) | iBoMA | | 10 | | | | | | | | | | |
| (c) | NMAM | | 2 | | | | | | | | | | 2.7 |
| (e) | DOM | | | | | | | | | | | | 6.3 |

| Amount (parts by mass) per 100 parts by mass of monomer components | | | | | | | | | | | | | |
|---|---|---|---|---|---|---|---|---|---|---|---|---|---|
| nDoSH | | 1 | 1 | 1 | 1 | 1 | 1 | 1 | 1 | 1 | 1 | 1 | 1 |
| Water | | 149.3 | 149.3 | 149.3 | 149.3 | 149.3 | 149.3 | 149.3 | 149.3 | 149.3 | 149.3 | 149.3 | 113.9 |
| MeAM | | | | | | | | | | 30 | 30 | 5 | |
| BuAM | | | | | | | | | 30 | | | | |
| DPG | | 30 | 30 | 30 | 30 | | | | | | | | 30 |
| TPG | | | | | | 30 | | | | | | | |
| DPGMME | | | | | | | 30 | | | | | | |
| MMB | | | | | | | | 30 | | | | | |

**Table 4**

| Evaluation | | Ex. | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Water repellency | Initial | 5- | 5- | 5- | 5- | 5- | 5- | 5- | 5- | 5- | 5- | 5- | 5- |
| | 20 time washing | 2+ | 3 | 3- | 3- | 3- | 3- | 3- | 3- | 3 | 4+ | 4- | 4+ |
| | 50 times washing | 2 | 2+ | 2+ | 2+ | 2 | 2+ | 2 | 2+ | 2+ | 3+ | 3- | 3+ |
| Oil repellency | Initial | 2 | 2-3 | 3+ | 3+ | 3+ | 3+ | 3+ | 3-4 | 3 | 4+ | 4-5 | 5-6 |
| | 20 time washing | 0 | 2-3 | 2-3 | 2-3 | 2-3 | 2+ | 2+ | 2-3 | 1-2 | 3+ | 3-4 | 3-4 |
| | 50 times washing | 0 | 1-2 | 2 | 2 | 2 | 2- | 2- | 2 | 1 | 2-3 | 3 | 2+ |
| Coating applicability | DMF repellency (sec) | 25 | 30 | 76 | 85 | 51 | 57 | 48 | 66 | At least 300 | At least 300 | At least 300 | At least 300 |
| | Toluene repellency (sec) | - | - | 6 | 5 | 4 | 3 | 4 | 8 | 204 | At least 300 | 280 | At least 300 |
| | Peel strength (N) | 5.3 | 7.6 | 6.7 | 6.4 | 6.8 | 6.8 | 6.9 | 7.8 | 5.8 | 5.6 | 5.8 | 3.8 |
| Molecular weight | Mn | - | - | - | - | 18600 | 17300 | 18000 | 12900 | Insoluble | Insoluble | - | - |
| | Mw | - | - | - | - | 51800 | 47600 | 50500 | 34500 | | | - | - |

### INDUSTRIAL APPLICABILITY

The water/oil repellent composition of the present invention is useful as a water/oil repellent agent for e.g. fiber products (clothing (sports wears, coats, jumpers, work clothes, uniforms, etc.), bags, industrial materials, etc.), nonwoven fabrics, leather products, stone materials, concrete building materials, etc. Further, it is useful as a coating agent for filtration material or as a surface protective agent. Further, it is useful also for an application wherein it is mixed with e.g. polypropylene or nylon, followed by molding or forming into fibers to impart water/oil repellency.

The entire disclosure of Japanese Patent Application No. 2011-099960 filed on April 27, 2011 including specification, claims and summary is incorporated herein by reference in its entirety.

## Claims

1. A water/oil repellent composition which comprises a polymer having structural units based on the following monomer (a) and structural units based on the following monomer (b), and an aqueous medium containing water and the following amide solvent (I):
monomer (a): a compound represented by the following formula (1):
(Z-Y)ₙX (1)
wherein Z is a C₁₋₆ polyfluoroalkyl group or a group represented by the following formula (2), Y is a bivalent organic group having no fluorine atom, or a single bond, n is 1 or 2, and X is, when n is 1, any one of the groups represented by the following formulae (3-1) to (3-5) and, when n is 2, any one of the groups represented by the following formulae (4-1) to (4-4):
CᵢF₂ᵢ₊₁O(CFX¹CF₂O)ⱼCFX²- (2)
wherein i is an integer of from 1 to 6, j is an integer of from 0 to 10, and each of X¹ and X² is a fluorine atom or a trifluoromethyl group;
-CR=CH₂ (3-1)
-C(O)OCR=CH₂ (3-2)
-OC(O)CR=CH₂ (3-3)
-OCH₂-*φ*-CR=CH₂ (3-4)
-OCH=CH₂ (3-5)
wherein R is a hydrogen atom, a methyl group or a halogen atom, and *φ* is a phenylene group;
-CH[-(CH₂)ₘCR=CH₂]- (4-1)
-CH[-(CH₂)ₘC(O)OCR=CH2]- (4-2)
-CH[-(CH₂)ₘOC(O)CR=CH₂]- (4-3)
-OC(O)CH=CHC(O)O- (4-4)
where R is a hydrogen atom, a methyl group or a halogen atom, and m is an integer of from 0 to 4;
monomer (b): vinyl chloride;
amide solvent (I): a compound represented by the following formula (5):
R¹ O(CH₂)ᵣ (CHR⁴)ₛ C(O)NR² R³ (5)
wherein r is an integer of from 0 to 3, s is 0 or 1, R¹ is a C₁₋₃ alkyl group, each of R² and R³ which are independent of each other, is a C₁₋₃ alkyl group (provided that it may contain an etheric oxygen atom), and R⁴ is a hydrogen atom or a methyl group.

2. The water/oil repellent composition according to Claim 1, wherein Z is a C₄₋₆ perfluoroalkyl group, Y is a C₁₋₄ alkylene group, n is 1, and X is the group (3-3) (provided that R is a hydrogen atom or a methyl group).

3. The water/oil repellent composition according to Claim 1 or 2, wherein the polymer further has structural units based on the following monomer (c):
monomer (c): a monomer having no polyfluoroalkyl group and having a crosslinkable functional group.

4. The water/oil repellent composition according to Claim 3, wherein the crosslinkable functional group is a hydroxy group, a blocked isocyanate group, an amino group or an epoxy group.

5. The water/oil repellent composition according to any one of Claims 1 to 4, wherein the polymer further has structural unites based on the monomer (d):
monomer (d): an alkyl acrylate or an alkyl methacrylate having no polyfluoroalkyl group and having a C₁₈₋₃₀ alkyl group.

6. The water/oil repellent composition according to any one of Claims 1 to 5, wherein the amide solvent (I) is 3-alkoxy-N,N-dialkylpropionamide.

7. The water/oil repellent composition according to any one of Claims 1 to 6, wherein the amount of the amide solvent (I) is from 3 to 50 parts by mass per 100 parts by mass of the polymer.

8. The water/oil repellent composition according to any one of Claims 1 to 7, which is an emulsion in which polymer fine particles are dispersed in the aqueous medium.

9. The water/oil repellent composition according to any one of Claims 1 to 8, which is an emulsion obtained by polymerizing the monomers by emulsion polymerization in the aqueous medium, or a diluted liquid of the emulsion.

10. A method for producing a water/oil repellent composition, which comprises polymerizing monomer components comprising the following monomer (a) and the following monomer (b) in an aqueous medium containing water and the following amide solvent (I) in the presence of a surfactant and a polymerization initiator to produce a dispersion or an emulsion in which fine particles of the polymer to be formed are dispersed in the aqueous medium:
monomer (a): a compound represented by the following formula (1):
(Z-Y)ₙX (1)
wherein Z is a C₁₋₆ polyfluoroalkyl group or a group represented by the following formula (2), Y is a bivalent organic group having no fluorine atom, or a single bond, n is 1 or 2, and X is, when n is 1, any one of the groups represented by the following formulae (3-1) to (3-5) and, when n is 2, any one of the groups represented by the following formulae (4-1) to (4-4):
CᵢF₂ᵢ₊₁O(CFX¹CF₂O)ⱼCFX²- (2)
wherein i is an integer of from 1 to 6, j is an integer of from 0 to 10, and each of X¹ and X² is a fluorine atom or a trifluoromethyl group;
-CR=CH₂ (3-1)
-C(O)OCR=CH₂ (3-2)
-OC(O)CR=CH₂ (3-3)
-OCH₂-*φ*-CR=CH₂ (3-4)
-OCH=CH₂ (3-5)
wherein R is a hydrogen atom, a methyl group or a halogen atom, and *φ* is a phenylene group;
-CH[-(CH₂)ₘCR=CH₂]- (4-1)
-CH[-(CH₂)ₘC(O)OCR=CH₂]- (4-2)
-CH[-(CH₂)ₘOC(O)CR=CH₂]- (4-3)
-OC(O)CH=CHC(O)O- (4-4)
where R is a hydrogen atom, a methyl group or a halogen atom, and m is an integer of from 0 to 4;
monomer (b): vinyl chloride;
amide solvent (I): a compound represented by the following formula (5):
R¹ O(CH₂)ᵣ(CHR⁴)ₛ C(O)NR² R³ (5)
wherein r is an integer of from 0 to 3, s is 0 or 1, R¹ is a C₁₋₃ alkyl group, each of R² and R³ which are independent of each other, is a C₁₋₃ alkyl group (provided that it may contain an etheric oxygen atom, and R⁴ is a hydrogen atom or a methyl group.

11. The production method according to Claim 10, wherein the monomer components further include the following monomer (c):
monomer (c): a monomer having no polyfluoroalkyl group and having a crosslinkable functional group.

12. The production method according to Claim 10 or 11, wherein the monomer components further include the following monomer (d):
monomer (d): an alkyl acrylate or an alkyl methacrylate having no polyfluoroalkyl group and having a C₁₈₋₃₀ alkyl group.

13. The production method according to any one of Claims 10 to 12, wherein the amount of the amide solvent (I) is from 3 to 50 parts by mass per 100 parts by mass of the monomer components.

14. An article having its surface treated with the water/oil repellent composition as defined in any one of Claims 1 to 9 thereby having a coating film of the polymer on its surface.

15. An article having its surface treated with a water/oil repellent composition obtained by the production method as defined in any one of Claims 10 to 13 or a diluted liquid thereof, thereby having a coating film of the polymer on its surface.
